# EUROPEAN PATENT SPECIFICATION

(11) **EP 3 193 535 B1**
(45) Date of publication and mention of the grant of the patent: **24.10.2018**
(21) Application number: 15840199.2
(22) Date of filing: 27.04.2015
(51) Int. Cl.: H04W 36/36

(54) **CELL HANDOVER METHOD IN GSM SYSTEM AND BASE STATION DEVICE**
ZELLENÜBERGABEVERFAHREN IN EINEM GSM-SYSTEM UND BASISSTATIONSVORRICHTUNG
PROCÉDÉ DE TRANSFERT DE CELLULE DANS UN SYSTÈME GSM ET DISPOSITIF DE STATION DE BASE

(30) Priority: 10.09.2014 CN 201410459618
(43) Date of publication of application: 19.07.2017
(73) Proprietor: ZTE Corporation, Shenzhen, Guangdong 518057 (CN)
(72) Inventor: GUO, Feng, Shenzhen Guangdong 518057 (CN); ZHANG, Mingjing, Shenzhen Guangdong 518057 (CN)
(74) Representative: HGF Limited
(86) International application number: PCT/CN2015/077517
(87) International publication number: WO 2016/037487

(56) References cited:
- WO-A1-98/09454
- WO-A1-99/65266
- WO-A1-2006/037372
- CN-A- 101 547 484
- CN-A- 101 686 511
- US-A1- 2014 045 498

## Description

### Technical Field

The document relates to the technology field of performing cell handover through a call gap in a global system for mobile communication GSM, and in particular to a scheme of performing cell handover through a call gap to improve call perception of wireless users.

### Background

GSM is the most widely used system with the most users in the world. For GSM, all large operators in each and every country attach great importance to enhancement of user perception. In the course of movement of users, cross-cell handover between different cellular cells often occurs. In the related art, for the cross-cell handover during a call of a GSM user, a controller sends a handover command, and a base station will send the handover command immediately to a cell phone without waiting for buffering mechanism.

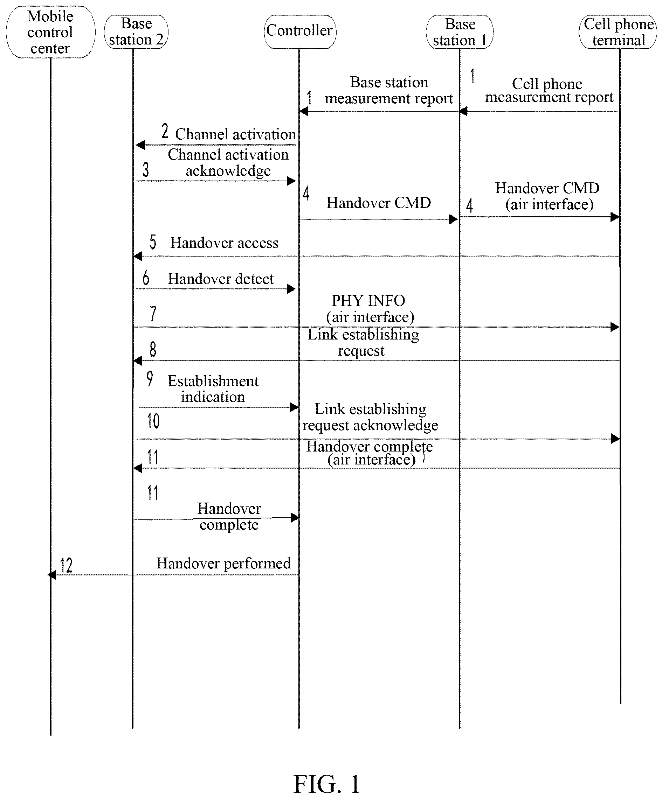

A procedure for processing handover of the related GSM is as shown in FIG. 1 and includes the follow operations.

A mobile station MS sends a measurement report to a base transceiver station 1 BTS1 over a slow associated control channel SACCH of an air interface, and the BTS1 in turn forwards the measurement report to a base station controller BSC.

After receiving the measurement report, the BSC determines that the MS is required to be handed over to other cell in the BSC according to information of the measurement report, and then the BSC sends Channel Activation to BTS2 of a target cell to activate a channel.

After the BTS2 receives the Channel Activation, if the type of the channel is correct, then the BTS2 will turn on a power amplifier over the designated channel, begin to receive information at uplink, and send Channel Activation Acknowledge to the BSC.

After receiving the Channel Activation Acknowledge from the BTS2, the BSC sends Handover CMD to the BTS1, and the BTS1forwards the Handover CMD to the MS.

After receiving the Handover CMD, the BTS2 attempts an access and the MS sends Handover Access to the BTS2.

The BTS2 sends a Handover Detect to the BSC after receiving the Handover Access from the MS, to inform the BSC of the receipt of the handover access message.

For asynchronous handover, i.e., the BTS1 and BTS2 belong to different base stations, the BTS2 sends PHY INFO to the MS while sending the Handover Detect. Herein, the PHY INFO message includes contents such as synchronization information with which the MS can have access correctly. But for synchronous handover, i.e., the BTS1 and BTS2 belong to the same base station, the sending of the PHY INFO will not occur.

For the asynchronous handover, the MS sends an SABM frame to the BTS2 after receiving the PHY INFO. But for the synchronous handover, the MS will send the SABM frame to the BTS2 soon after sending the Handover Access.

After receiving the first SABM frame, the BTS2 will send EST IND to the BSC to inform the BSC of establishment of a wireless link.

Meanwhile, the BTS2 responds to the MS with a UA frame to inform the MS of establishment of a wireless link layer.

At this time, the MS sends Handover Complete to the BTS2, and the BTS2 forwards the Handover Complete to the BSC to inform the BSC of completion of the handover.

The BSC will send Handover Preformed to the MSC to inform the MSC that one handover is performed once; meanwhile, the BSC will initiate a local release process for the old channel of the BTS1 to release the channel.

Since it is not considered that the base station is in call frame transmission or in a discontinuous transmission DTX gap, thus, there may be some damages to voice perception of the users.

WO 99/65266 A1 discloses Audible effects of handover of a mobile subscriber station (Ml, 22) eliminated in either the uplink (UL) or the downlink (DL) by implementing discontinuous transmission (DTX) within the system on either or both of the links. A voice activity detector (VAD) monitors whether speech or non-transparent data is originating from a party and, if not, the transmission of that party is interrupted and only a single SID frame is sent during each SACCH period to update the background noise characteristics being generated at the other parties 1 receiver. Once it is determined by the system that a handover of a mobile needs to be performed (32), that handover is delayed until the party on the link on which DTX is implemented is neither talking nor sending non-transparent data (34) ensuring that the other party is having comfort noise being generated in its receiver and, thus, will not hear any audible effect of the handover.

WO 98/09454 A1 discloses a communication system (100) provides for the elimination of handover mute when switching from a serving cell (102) to a target cell (110) is desired. Once the need for a handover is detected (404), the system (100) searches for the presence of non-voice activity (406). The absence of voice activity is then acted upon by the system (100) to initiate (412) and complete (414) the handover. Since no conversation is taking place, no mute is detected by the users.

WO 2006/037372 A1 discloses a method of controlling the cell re-selection of a mobile station (4) between cells (1) of a cellular-based radio access network (6). The method comprises the steps of determining when a cell re-selection for the mobile station (4) is appropriate, determining whether or not the mobile station (4) is involved in a push to talk service comprising a series of talk bursts, and if the mobile station is involved in a push to talk service, delaying the cell re-selection until such time as a period of silence between talk bursts occurs.

### Summary

A technical problem to be solved by the present invention is to provide a method for cell handover in a GSM system and a base station device according to appended independent claims to solve the problem of causing damages to call voice of users during cell handover in the related art. Further improvements and embodiments are provided in the dependent claims.

To solve the technical problem described above, the following technical scheme is adopted.

Also provided is a method for cell handover in a global system for mobile communication GSM including the following steps.

A base station determines whether the base station is currently in a downlink discontinuous transmission DTX gap after the base station receives a handover command sent by a network side.

If the base station is currently in the DTX gap, the base station sends the handover command immediately to a target user; and if the base station is currently in a non-DTX gap, the base station first buffers the handover command, and then selects an occasion according to a buffer time window to send the buffered handover command to the target user.

In an exemplary embodiment, the step that if the base station is currently in a non-DTX gap, the base station first buffers the handover command, and then selects an occasion according to a buffer time window to send the buffered handover command to the target user includes:
the base station buffers the handover command and determines whether one DTX gap is encountered during waiting within a preset buffer time window;
if one DTX gap is encountered during waiting within the preset buffer time window, the base station sends the handover command in the DTX gap; and
if one DTX gap is not encountered during waiting within the preset buffer time window, the base station sends the handover command upon expiration of the preset buffer time window.

In an exemplary embodiment, the method further includes:
the base station adjusts in real time a size of the buffer time window.

In an exemplary embodiment, the step of the base station adjusting in real time a size of the buffer time window includes:
the base station counts a number of times of successful capture of the occasion, a number of times of failed capture of the occasion and a number of times of sending the handover command immediately in a set time period; and
the base station adjusts the size of the buffer time window according to proportions of the number of times of successful capture of the occasion, the number of times of failed capture of the occasion and the number of times of sending the handover command immediately;
herein the successful capture of the occasion means that, after buffering the handover command, when the base station encounters one DTX gap during waiting within the preset buffer time window, the base station sends the handover command; and
the failed capture of the occasion means that, after buffering the handover command, the base station does not encounter one DTX gap during waiting within the preset buffer time window, and the base station sends the handover command upon expiration of the preset buffer time window.

In an exemplary embodiment, an initial configuration range of the buffer time window is 500ms∼3000ms.

Also provided is a base station device including a baseband processing unit and a sending unit.

The baseband processing unit is arranged to determine whether a base station is currently in a downlink discontinuous transmission DTX gap after the base station receives a handover command sent by a network side.

The sending unit is arranged to, if the base station is currently in the DTX gap, send the handover command immediately to a target user, and if the base station is currently in a non-DTX gap, first buffer the handover command, and then select an occasion according to a buffer time window to send the buffered handover command to the target user.

In an exemplary embodiment, the sending unit is arranged to, if the base station is currently in a non-DTX gap, first buffer the handover command, and then select the occasion according to the buffer time window to send the buffered handover command to the target user by the following manner:
buffering the handover command and determining whether one DTX gap is encountered during waiting within a preset buffer time window;
if one DTX gap is encountered during waiting within the preset buffer time window, sending the handover command in the DTX gap; and
if one DTX gap is not encountered during waiting within the preset buffer time window, sending the handover command upon expiration of the preset buffer time window.

In an exemplary embodiment, the device further includes a configuration unit.

The configuration unit is arranged to adjust in real time a size of the buffer time window.

In an exemplary embodiment, the configuration unit includes a counting module and a buffer time window adjusting module.

The counting module is arranged to count a number of times of successful capture of the occasion, a number of times of failed capture of the occasion and a number of times of sending the handover command immediately in a set time period.

The buffer time window adjusting module is arranged to adjust the size of the buffer time window according to proportions of the number of times of successful capture of the occasion, the number of times of failed capture of the occasion and the number of times of sending the handover command immediately.

Herein, the successful capture of the occasion means that, after the handover command is buffered, when one DTX gap is encountered during waiting within the preset buffer time window, the handover command is sent. The failed capture of the occasion means that, after the handover command is buffered, one DTX gap is not encountered during waiting within the preset buffer time window, and the handover command is sent upon expiration of the preset buffer time window.

In an exemplary embodiment, an initial configuration range of the buffer time window is 500ms∼3000ms.

Also provided is a computer program including program instructions. When the program instructions executed by a base station, the base station can perform the method for cell handover in a GSM system described above.

Also provided is a carrier carrying the computer program described above.

The technical scheme of the present application performs cross-cell handover using a gap of voice transmission during a call, thereby avoiding damages of voice frames in the handover process to some extent. It is estimated that, after the measure is implemented, the improvement of network voice quality is explicit.

### Brief Description of Drawings

FIG. 1 is a flow chart for processing handover of a GSM in the related art.
FIG. 2 is a schematic diagram of an added handover processing point in accordance with an embodiment of the present invention.
FIG. 3 is a flow chart of handover command control processing in accordance with an embodiment of the present invention.
FIG. 4 is a structural block diagram of a base station device in accordance with an embodiment of the present invention.

### Detailed Description

The technical scheme of embodiments of the present invention will be described in further detail in conjunction with the accompanying drawings. It is should be noted that the embodiments of the present application and features in the embodiments can be combined with each other arbitrarily without conflict.

### Embodiment 1

It is proposed by inventors of the present application that, a base station may use frame stealing to send a handover command, i.e., find out the call gap of a GSM user, and then adjust slightly handover executing occasion and use a pause gap during the call of the user to recognize whether a voice frame to be sent is a significant frame or non-significant frame time, to perform cross-cell handover of a GSM, thereby reducing damages to voice quality and further improving voice quality perception of the user.

Based on the idea described above, the present embodiment provides a method for cell handover in a GSM system including mainly the following operations.

The base station determines whether a base station is currently in a downlink DTX gap after the base station receives a handover command sent by a network side.

If the base station is currently in the DTX gap, the base station sends the handover command immediately to a corresponding user. If the base station is currently in a non-DTX gap, the base station first buffers the handover command, and then selects an occasion according to a buffer time window to send the buffered handover command to the corresponding user.

The corresponding user may be a user, who is engaged in a call, to be handed over to a time slot of a target cell, i.e., a target user.

The base station selects the occasion to send the handover command through the buffer time window, which mainly refers to capturing the DTX gap, obtaining a significant frame and non-significant frame states and finally determining an occasion for sending the handover command. Specifically, the base station buffers the handover command and determines whether one DTX gap is encountered during waiting within a preset buffer time window. If one DTX gap is encountered during waiting within the preset buffer time window, the base station sends the handover command in the DTX gap. If one DTX gap is not encountered during waiting within the preset buffer time window, the base station sends the handover command upon expiration of the preset buffer time window.

In addition, the base station may further adjust in real time a size of the buffer time window, for example, in a manual or automatic manner. In an exemplary embodiment, the base station may adjust adaptively the buffer time window to a reasonable size according to the effect (measured in terms of the counted proportions of the number of times of successful and failed capture of the DTX gap) of the selected occasion, such that the proportion of the failed capture is lowest.

Specifically, the base station counts the number of times of successful capture of the occasion, the number of times of failed capture of the occasion and the number of times of sending the handover command immediately in a set time period.

The base station adjusts the size of the buffer time window according to proportions of the number of times of successful capture of the occasion, the number of times of failed capture of the occasion and the number of times of sending the handover command immediately.

Herein, the successful capture of the occasion means that, after buffering the handover command, when the base station encounters one DTX gap during waiting within the preset buffer time window, the base station sends the handover command.

The failed capture of the occasion means that, after buffering the handover command, the base station does not encounter one DTX gap during waiting within the preset buffer time window, and the base station sends the handover command upon expiration of the preset buffer time window.

In the present embodiment, an initial configuration range of the buffer time window is 500ms∼3000ms.

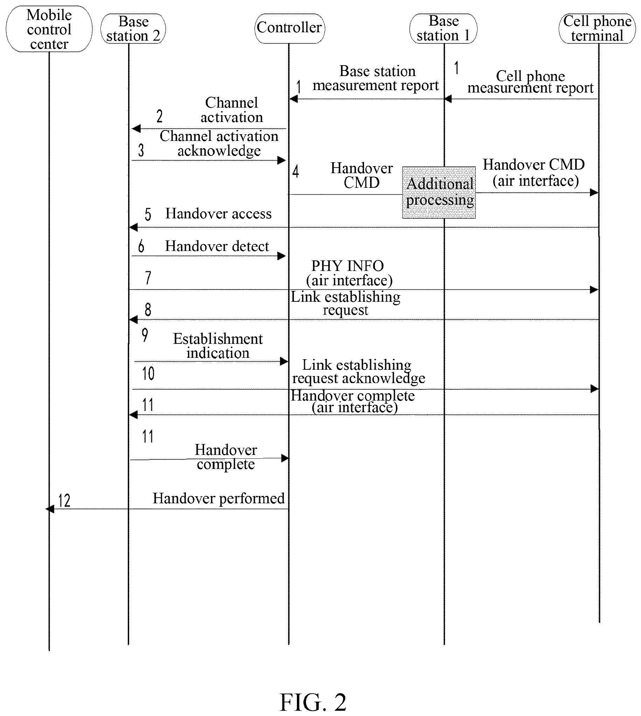

It can be seen from the method described above that the present embodiment does not change the original signaling and the order of the handover process defined by the GSM protocol. A process for handover command buffer and analysis processing is just added at the base station side. Please refer to FIG. 2 for the modification (a handover processing point is added in the embodiment of the present invention).

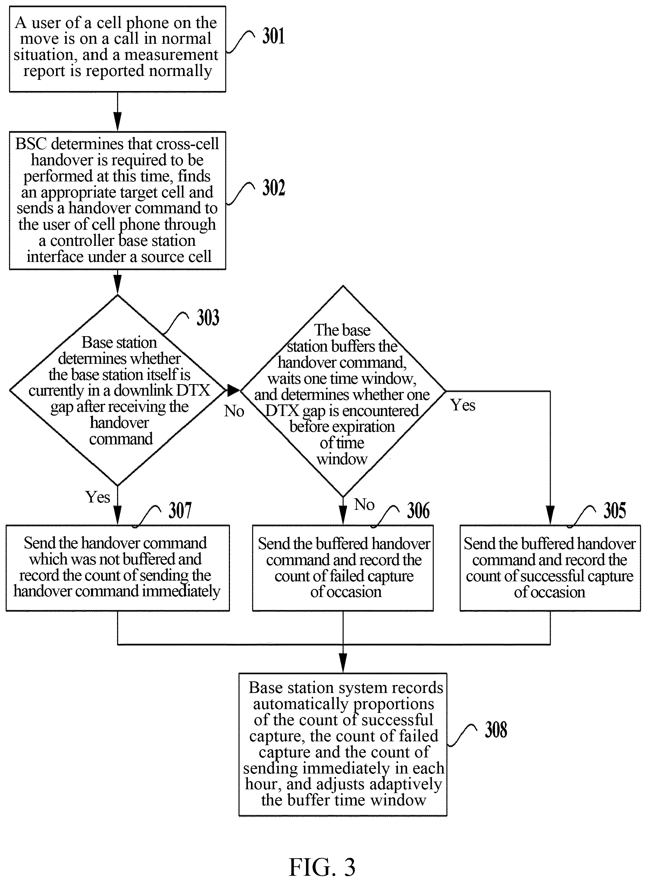

The specific process of implementing cell handover in accordance with the alternative scheme above will be described in conjunction with FIG. 3 and includes the following operations.

Part I (the main process for handover control procedure):
In step 301, a user of a cell phone on the move is on a call in normal situation, and a measurement report is reported normally.
In step 302, a base station controller at the network side determines that cross-cell handover is required to be performed at this time, finds an appropriate target cell and sends a handover command to the user of the cell phone through a controller base station interface (Abis interface) under a source cell.
In step 303, the base station determines whether the base station is currently in a downlink DTX gap after receiving the handover command through the Abis interface. If yes, the base station performs step 307. If no, the base station skips to step 304.

Specifically, a baseband processing portion of the base station is capable of obtaining information of the current voice frame, and determining whether the current voice frame is a significant voice frame through the downlink DTX gap when the current handover command is ready to be sent, since only a voice frame transmitted in the DTX gap is a non-significant frame during a call, i.e., when in the downlink DTX gap, the transmitted voice frame is a non-significant frame. When in the downlink DTX gap, step 307 will be executed to send immediately the handover command. On the contrary, when not in the downlink DTX gap, the transmitted voice frame is a significant frame, and step 304 is required to be executed to first buffer the handover command and then wait for an occasion to send it.

In step 304, the current handover command is buffered, and one time window (the range of a size of the window may be 500ms∼3000ms according to system configuration, and the size of the window starts with 500ms by default) is waited, and whether one DTX gap is encountered before expiration of the time window is determined. If yes, step 305 will be executed. If no, step 306 will be executed.

Part II (the buffer time window is further optimized by recording capture count):
In step 305, the buffered handover command is sent and the count of times of successful capture of the occasion is recorded. The process proceeds to step 308.
In step 306, the buffered handover command is sent and the count of times of failed capture of the occasion is recorded. The process proceeds to step 308.
In step 307, the handover command which was not buffered is sent and the count of times of sending the handover command immediately is recorded.
In step 308, the base station system records automatically proportions of the count of times of successful capture, the count of times of the failed capture count, and the count of times of sending immediately in each hour, and adjusts adaptively the buffer time window, such that a configuration with which the proportion of the count of times of the failed capture is lowest is optimal.

Away of adjusting the time window is further described herein by an example. Taking an hour as a statistical period, if the time window is adjusted gradually from an default initial value 500ms, the current failure ratio is 10%; the time window is increased gradually later, the failure ratio will decrease gradually until the time window is adjusted to 1200ms, at the moment the failure ratio is 5%; and the time window continues to be adjusted to 1300ms, and the failure ratio, on the contrary, is higher; so 1200ms is the optimal time window configuration here. 1200ms will be the actually effective time window. In a later period of time, the system will continue the detection and traverse the range of 600ms--3000ms. If in a certain statistical period a better failure ratio is found in an hour, then the time window configuration will be refreshed.

### Embodiment 2

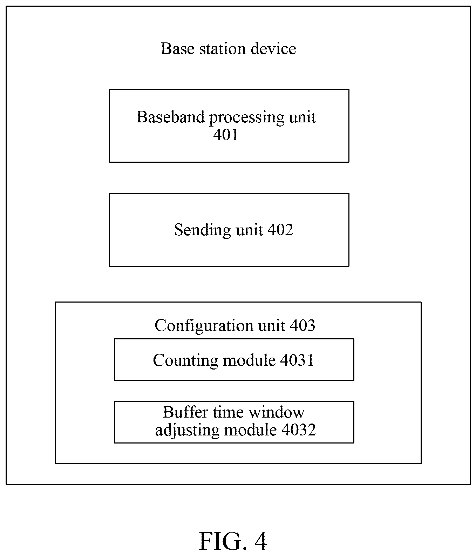

The present embodiment provides a base station device as shown in FIG. 4. The base station can implement the method according to the embodiment 1 described above and includes at least the following units.

A baseband processing unit 401 is arranged to determine whether the base station device is currently in a downlink DTX gap after the base station device receives a handover command sent by a network side.

A sending unit 402 is arranged to, if the base station device is currently in the DTX gap, send the handover command immediately to a corresponding user, and if the base station device is currently in a non-DTX gap, first buffer the handover command, then select an occasion according to a buffer time window to send the buffered handover command to the corresponding user.

Specifically, the sending unit determines whether one DTX gap is encountered during waiting within a preset buffer time window after buffering the handover command.

The sending unit sends the handover command in the DTX gap if one DTX gap is encountered during waiting within the preset buffer time window.

The sending unit sends the handover command upon expiration of the preset buffer time window if one DTX gap is not encountered during waiting within the preset buffer time window.

In addition, the alternative scheme proposes to add a configuration unit 403. The configuration unit 403 is arranged to adjust in real time a size of the buffer time window. Specifically, the configuration unit may adjust in real time the size of the buffer time window according to user instructions, or may adjust the size of the buffer time window in an adaptive adjusting manner. Moreover, an initial configuration range of the buffer time window is preferably 500ms∼3000ms.

When the configuration unit 403 adjusts the size of the buffer time window in the adaptive adjusting manner, the configuration unit 403may be divided into the following modules.

A counting module 4031 is arranged to count the number of times of successful capture of the occasion, the number of times of failed capture of the occasion and the number of times of sending the handover command immediately in a set time period.

A buffer time window adjusting module 4032 is arranged to adjust the size of the buffer time window according to proportions of the number of times of successful capture of the occasion, the number of times of failed capture of the occasion and the number of times of sending the handover command immediately.

It should be noted that the successful capture of the occasion involved in the embodiment means that, after the handover command is buffered, when one DTX gap is encountered during waiting within the preset buffer time window, the handover command is sent. The failed capture of the occasion means that, after the handover command is buffered, one DTX gap is not encountered during waiting within the preset buffer time window, and the handover command is sent upon expiration of the preset buffer time window.

It can be seen from the embodiments described above that the technique scheme of the present application uses a voice gap, DTX, during a call, before the handover command is sent to a cell phone by a base station, makes a reference to the state of DTX, adjusts slightly the occasion when the handover occurs if necessary, buffers for a certain period of time, and rightly sends the handover command using the DTX gap, such that the cell phone performs the handover during the DTX gap, thereby avoiding waste and loss of voice frames and improving call perception of the user.

Those ordinary skilled in the art can understand that all or part of steps in the method described above can be carried out by the related hardware through programs. The programs may be stored in computer readable storage media, such as read-only memory, magnetic disk or optical disk or the like. Alternatively, all or part of steps in the embodiments described above may be carried out using one or more integrated circuits. Accordingly, various modules/units in the embodiments described above may be implemented in a form of hardware, or may be implemented using a form of software functional module. The present invention is not limited to the combination of any specific form of hardware and software.

All above is only the alternative embodiments of the present invention only and not to limit the protection scope of the present invention. Any modification, equivalent substitution and improvement made within the essence and principle of the present invention should be included in the scope of the present invention.

### Industrial Applicability

The technical scheme of the present application performs cross-cell handover using a gap of voice transmission during a call, thereby avoiding damages of voice frames in the handover process to some extent. It is estimated that, after the measure is implemented, the improvement of network voice quality is explicit. Therefore, the present invention has very strong industrial applicability.

## Claims

1. A method for cell handover in a global system for mobile communication, GSM, the method performed by a base station and comprising:
determining whether the base station is currently in a downlink discontinuous transmission, DTX, gap after the base station receives a handover command sent by a network side (303); and
if the base station is currently in the DTX gap, the base station sending the handover command immediately to a target user (307);
**characterized in that** if the base station is currently in a non-DTX gap, the base station first buffering the handover command, then selecting an occasion according to a buffer time window to send the buffered handover command to the target user,
wherein the method further comprises:
the base station adjusting in real time a size of the buffer time window (308),
the step of the base station adjusting in real time a size of the buffer time window comprises:
the base station counting a number of times of successful capture of the occasion, a number of times of failed capture of the occasion and a number of times of sending the handover command immediately in a set time period; and
adjusting the size of the buffer time window according to proportions of the number of times of successful capture of the occasion, the number of times of failed capture of the occasion and the number of times of sending the handover command immediately,
wherein the successful capture of the occasion means that, after buffering the handover command, when the base station encounters one DTX gap during waiting within the preset buffer time window, the base station sends the handover command; and
the failed capture of the occasion means that, after buffering the handover command, the base station does not encounter one DTX gap during waiting within the preset buffer time window, and the base station sends the handover command upon expiration of the preset buffer time window.

2. The method for cell handover in a GSM system according to claim 1, wherein the step that if the base station is currently in a non-DTX gap, the base station first buffering the handover command, then selecting an occasion according to a buffer time window to send the buffered handover command to the target user comprises:
the base station buffering the handover command and determining whether one DTX gap is encountered during waiting within a preset buffer time window;
if one DTX gap is encountered during waiting within the preset buffer time window, the base station sending the handover command in the DTX gap (305); and
if one DTX gap is not encountered during waiting within the preset buffer time window, the base station sending the handover command upon expiration of the preset buffer time window (306).

3. The method for cell handover in a GSM system according to any one of claims 1 to 2, wherein an initial configuration range of the buffer time window is 500ms∼3000ms.

4. A base station device comprising a baseband processing unit (401) and a sending unit (402), wherein
the baseband processing unit is arranged to determine whether the base station device is currently in a downlink discontinuous transmission, DTX, gap after the base station device receives a handover command sent by a network side; and
the sending unit is arranged to, if the base station is currently in the DTX gap, send the handover command immediately to a target user;
**characterized in that** the sending unit is further arranged to, if the base station is currently in a non-DTX gap, first buffer the handover command, and then select an occasion according to a buffer time window to send the buffered handover command to the target user,
the device further comprises a configuration unit (403), and
the configuration unit is arranged to adjust in real time a size of the buffer time window,
and the configuration unit comprises a counting module (4031) and a buffer time window adjusting module (4032), wherein
the counting module is arranged to count a number of times of successful capture of the occasion, a number of times of failed capture of the occasion and a number of times of sending the handover command immediately in a set time period; and
the buffer time window adjusting module is arranged to adjust the size of the buffer time window according to proportions of the number of times of successful capture of the occasion, the number of times of failed capture of the occasion and the number of times of sending the handover command immediately,
wherein the successful capture of the occasion means that, after the handover command is buffered, when one DTX gap is encountered during waiting within the preset buffer time window, the handover command is sent; and
the failed capture of the occasion means that, after the handover command is buffered, one DTX gap is not encountered during waiting within the preset buffer time window, and the handover command is sent upon expiration of the preset buffer time window.

5. The base station device according to claim 4, wherein the sending unit is arranged to, if the base station is currently in a non-DTX gap, first buffer the handover command, and then select an occasion according to a buffer time window to send the buffered handover command to the target user by the following manner:
buffering the handover command and determining whether one DTX gap is encountered during waiting within a preset buffer time window;
if one DTX gap is encountered during waiting within the preset buffer time window, sending the handover command in the DTX gap; and
if one DTX gap is not encountered during waiting within the preset buffer time window, sending the handover command upon expiration of the preset buffer time window.

6. The base station device according to any one of claims 4 to 5, wherein an initial configuration range of the buffer time window is 500ms∼3000ms.

7. A computer program comprising program instructions, wherein when program instructions are executed by a base station, the base station performs the method for cell handover in a GSM system according to any one of claims 1 to 3.

8. A computer readable carrier carrying the computer program according to claim 7.

## Patentansprüche

1. Verfahren zur Zellenübergabe in einem globalen System für mobile Kommunikation, GSM, wobei das Verfahren durch eine Basisstation ausgeführt wird und Folgendes umfasst:
Bestimmen, ob die Basisstation aktuell in einer Downlink, diskontinuierlichen Übertragungs-, DTX-, Lücke ist, nachdem die Basisstation einen Übergabebefehl empfängt, der durch eine Netzwerkseite (303) gesendet wird; und, falls die Basisstation aktuell in der DTX-Lücke ist, sendet die Basisstation den Übergabebefehl umgehend an einen Zielbenutzer (307);
**dadurch gekennzeichnet, dass**, falls die Basisstation aktuell in einer nicht-DTX-Lücke ist, die Basisstation zuerst den Übergabebefehl puffert, anschließend eine Gelegenheit entsprechend einem Pufferzeitfenster auswählt, um den gepufferten Übergabebefehl an den Zielbenutzer zu senden, wobei das Verfahren ferner Folgendes umfasst:
die Basisstation stellt in Echtzeit eine Größe des Pufferzeitfensters (308) ein, wobei der Schritt des Einstellens in Echtzeit, durch die Basisstation, einer Größe des Pufferzeitfensters Folgendes umfasst:
die Basisstation zählt eine Anzahl Male von erfolgreichem Erfassen der Gelegenheit, eine Anzahl Male von fehlgeschlagenem Erfassen der Gelegenheit und eine Anzahl Male von umgehenden Senden des Übergabebefehls in einem festgelegten Zeitraum; und
Einstellen der Größe des Pufferzeitfensters entsprechend den Verhältnissen der Anzahl Male von erfolgreichem Erfassen der Gelegenheit, der Anzahl Male von fehlgeschlagenem Erfassen der Gelegenheit und der Anzahl Male von umgehenden Senden des Übergabebefehls,
wobei das erfolgreiche Erfassen der Gelegenheit bedeutet, dass, nach Puffern des Übergabebefehls, wenn die Basisstation auf eine DTX-Lücke während des Wartens innerhalb des voreingestellten Pufferzeitfensters trifft, die Basisstation den Übergabebefehl sendet; und
das fehlgeschlagene Erfassen der Gelegenheit bedeutet, dass, nach Puffern des Übergabebefehls, die Basisstation nicht auf eine DTX-Lücke während des Wartens innerhalb des voreingestellten Pufferzeitfensters trifft, und die Basisstation den Übergabebefehl nach Ablauf des voreingestellten Pufferzeitfensters sendet.

2. Verfahren zur Zellenübergabe in einem GSM-System nach Anspruch 1, wobei der Schritt, dass, falls die Basisstation aktuell in einer nicht-DTX-Lücke ist, die Basisstation zuerst den Übergabebefehl puffert, anschließend eine Gelegenheit entsprechend einem Pufferzeitfenster auswählt, um den gepufferten Übergabebefehl an den Zielbenutzer zu senden, Folgendes umfasst:
die Basisstation puffert den Übergabebefehl und bestimmt, ob auf eine DTX-Lücke während des Wartens innerhalb eines voreingestellten Pufferzeitfensters getroffen wird;
falls auf eine DTX-Lücke während des Wartens innerhalb des voreingestellten Pufferzeitfensters getroffen wird, sendet die Basisstation den Übergabebefehl in der DTX-Lücke (305); und
falls nicht auf eine DTX-Lücke während des Wartens innerhalb des voreingestellten Pufferzeitfensters getroffen wird, sendet die Basisstation den Übergabebefehl nach Ablauf des voreingestellten Pufferzeitfensters (306).

3. Verfahren zur Zellenübergabe in einem GSM-System nach einem der Ansprüche 1 bis 2, wobei ein Anfangskonfigurationsbereich des Pufferzeitfensters 500ms∼3000ms ist.

4. Basisstationsvorrichtung, umfassend eine Basisband-Verarbeitungseinheit (401) und eine Sendeeinheit (402), wobei die Basisband-Verarbeitungseinheit dazu angeordnet ist, zu bestimmen, ob die Basisstationsvorrichtung aktuell in einer Downlink, diskontinuierlichen Übertragungs-, DTX, -Lücke ist, nachdem die Basisstationsvorrichtung einen Übergabebefehl empfängt, der durch eine Netzwerkseite gesendet wird; und
die Sendeeinheit dazu angeordnet ist, falls die Basisstation aktuell in der DTX-Lücke ist, den Übergabebefehl umgehend an einen Zielbenutzer zu senden;
**dadurch gekennzeichnet, dass** die Sendeeinheit ferner dazu angeordnet ist, falls die Basisstation aktuell in einer nicht-DTX-Lücke ist, zuerst den Übergabebefehl zu puffern, und anschließend eine Gelegenheit entsprechend einem Pufferzeitfenster auszuwählen, um den gepufferten Übergabebefehl an den Zielbenutzer zu senden, die Vorrichtung ferner eine Konfigurationseinheit (403) umfasst, und die Konfigurationseinheit dazu angeordnet ist, in Echtzeit eine Größe des Pufferzeitfensters einzustellen, und die Konfigurationseinheit ein Zählmodul (4031) und ein Pufferzeitfenster-Einstellmodul (4032) umfasst, wobei das Zählmodul dazu angeordnet ist, eine Anzahl Male von erfolgreichem Erfassen der Gelegenheit, eine Anzahl Male von fehlgeschlagenem Erfassen der Gelegenheit und eine Anzahl Male von umgehenden Senden des Übergabebefehls in einem festgelegten Zeitraum zu zählen; und
das Pufferzeitfenster-Einstellmodul dazu angeordnet ist, die Größe des Pufferzeitfensters entsprechend den Verhältnissen der Anzahl Male von erfolgreichem Erfassen der Gelegenheit, der Anzahl Male von fehlgeschlagenem Erfassen der Gelegenheit und der Anzahl Male von umgehenden Senden des Übergabebefehls einzustellen, wobei das erfolgreiche Erfassen der Gelegenheit bedeutet, dass, nachdem der Übergabebefehl gepuffert ist, wenn auf eine DTX-Lücke während des Wartens innerhalb des voreingestellten Pufferzeitfensters getroffen wird, der Übergabebefehl gesendet wird; und
das fehlgeschlagene Erfassen der Gelegenheit bedeutet, dass, nachdem der Übergabebefehl gepuffert ist, nicht auf eine DTX-Lücke während des Wartens innerhalb des voreingestellten Pufferzeitfensters getroffen wird, und der Übergabebefehl nach Ablauf des voreingestellten Pufferzeitfensters gesendet wird.

5. Basisstationsvorrichtung nach Anspruch 4, wobei die Sendeeinheit dazu angeordnet ist, falls die Basisstation aktuell in einer nicht-DTX-Lücke ist, zuerst den Übergabebefehl zu puffern, und anschließend eine Gelegenheit entsprechend einem Pufferzeitfenster auszuwählen, um den gepufferten Übergabebefehl an den Zielbenutzer auf folgende Weise zu senden:
Puffern des Übergabebefehls und bestimmen, ob auf eine DTX-Lücke während des Wartens innerhalb eines voreingestellten Pufferzeitfenster getroffen wird;
falls auf eine DTX-Lücke während des Wartens innerhalb des voreingestellten Pufferzeitfensters getroffen wird, Senden des Übergabebefehls in der DTX-Lücke; und
falls nicht auf eine DTX-Lücke während des Wartens innerhalb des voreingestellten Pufferzeitfensters getroffen wird, Senden des Übergabebefehls nach Ablauf des voreingestellten Pufferzeitfensters.

6. Basisstationsvorrichtung nach einem der Ansprüche 4 bis 5, wobei ein Anfangskonfigurationsbereich des Pufferzeitfensters 500ms∼3000ms ist.

7. Computerprogramm umfassend Programmanweisungen, wobei, wenn Programmanweisungen durch eine Basisstation ausgeführt werden, die Basisstation das Verfahren zur Zellenübergabe in einem GSM-System nach einem der Ansprüche 1 bis 3 ausführt.

8. Computerlesbarer Träger, das Computerprogramm nach Anspruch 7 tragend.

## Revendications

1. Procédé de transfert intercellulaire dans un système global de communication mobile, GSM, le procédé exécuté par une station de base et comprenant :
la détermination si la station de base est actuellement dans un intervalle de transmission discontinue en liaison descendante, DTX, après que la station de base reçoit une commande de transfert envoyée par un côté réseau (303) ; et si la station de base est actuellement dans l'intervalle DTX, la station de base envoyant la commande de transfert immédiatement à un utilisateur cible (307) ;
**caractérisé en ce que** si la station de base est actuellement dans un intervalle non DTX, la station de base mettant d'abord en mémoire tampon la commande de transfert, puis sélectionnant une occasion en fonction d'une fenêtre de temps de tampon pour envoyer la commande de transfert en tampon à l'utilisateur cible, dans lequel le procédé comprend en outre :
la station de base ajustant en temps réel une taille de la fenêtre de temps de tampon (308), l'étape de la station de base ajustant en temps réel une taille de la fenêtre de temps de tampon comprend :
la station de base comptant un nombre d'occurrences de capture réussie de l'occasion, un nombre d'occurrences de capture manquée de l'occasion et un nombre d'occurrences d'envoi de la commande de transfert immédiatement dans une période de temps définie ; et
l'ajustement de la taille de la fenêtre de temps de tampon en fonction des proportions du nombre d'occurrences de capture réussie de l'occasion, du nombre d'occurrences de capture manquée de l'occasion et du nombre d'occurrences d'envoi de la commande de transfert immédiatement, dans lequel la capture réussie de l'occasion signifie que, après la mise en en mémoire tampon de la commande de transfert, quand la station de base rencontre un intervalle DTX pendant l'attente dans la fenêtre de temps de tampon prédéfinie, la station de base envoie la commande de transfert ; et
la capture échouée de l'occasion signifie que, après la mise en en mémoire tampon de la commande de transfert, la station de base ne rencontre pas un intervalle DTX pendant l'attente dans la fenêtre de temps de tampon prédéfinie, et la station de base envoie la commande de transfert à l'expiration de la fenêtre de temps de tampon prédéfinie.

2. Procédé de transfert intercellulaire dans un système GSM selon la revendication 1, dans lequel l'étape dans laquelle si la station de base est actuellement dans un intervalle non DTX, la station de base mettant d'abord en mémoire tampon la commande de transfert, puis sélectionnant une occasion en fonction d'une fenêtre de temps de tampon pour envoyer la commande de transfert en tampon à l'utilisateur cible comprend :
la station de base mettant en mémoire tampon la commande de transfert et déterminant si un intervalle DTX est rencontré pendant l'attente dans une fenêtre de temps de tampon prédéfinie ;
si un intervalle DTX est rencontré pendant l'attente dans la fenêtre de temps de tampon prédéfinie, la station de base envoyant la commande de transfert dans l'intervalle DTX (305) ; et
si un intervalle DTX n'est pas rencontré pendant l'attente dans la fenêtre de temps de tampon prédéfinie, la station de base envoyant la commande de transfert à l'expiration de la fenêtre de temps de tampon prédéfinie (306).

3. Procédé de transfert intercellulaire dans un système GSM selon l'une quelconque des revendications 1 à 2, dans lequel une plage de configuration initiale de la fenêtre de temps de tampon est 500 ms∼3000 ms.

4. Dispositif de station de base comprenant une unité de traitement de traitement de bande de base (401) et une unité d'envoi (402), dans lequel l'unité de traitement de bande de base est agencée pour déterminer si le dispositif de station de base est actuellement dans un intervalle de transmission discontinue en liaison descendante, DTX, après que le dispositif de station de base reçoit une commande de transfert envoyée par un côté réseau ; et
l'unité d'envoi est agencée pour, si la station de base est actuellement dans l'intervalle DTX, envoyer la commande de transfert immédiatement à un utilisateur cible ;
**caractérisé en ce que** l'unité d'envoi est en outre agencée pour, si la station de base est actuellement dans un intervalle non DTX, d'abord mettre en mémoire tampon la commande de transfert, et ensuite sélectionner une occasion en fonction d'une fenêtre de temps de tampon pour envoyer la commande de transfert en tampon à l'utilisateur cible, le dispositif comprend en outre une unité de configuration (403), et l'unité de configuration est agencée pour ajuster en temps réel une taille de la fenêtre de temps de tampon, et l'unité de configuration comprend un module de comptage (4031) et un module d'ajustement de la fenêtre de temps de tampon (4032), dans lequel le module de comptage est agencé pour compter un nombre d'occurrences de capture réussie de l'occasion, un nombre d'occurrences de capture manquée de l'occasion et un nombre d'occurrences d'envoi de la commande de transfert immédiatement dans une période de temps définie ; et
le module d'ajustement de la fenêtre de temps de tampon est agencé pour ajuster la taille de la fenêtre de temps de tampon en fonction des proportions du nombre d'occurrences de capture réussie de l'occasion, du nombre d'occurrences de capture manquée de l'occasion et du nombre d'occurrences d'envoi de la commande de transfert immédiatement, dans lequel la capture réussie de l'occasion signifie que, après que la commande de transfert a été mise en mémoire tampon, quand un intervalle DTX est rencontré pendant l'attente dans la fenêtre de temps de tampon prédéfinie, la commande de transfert est envoyée ; et
la capture échouée de l'occasion signifie que, après que la commande de transfert a été mise en mémoire tampon, un intervalle DTX n'est pas rencontré pendant l'attente dans la fenêtre de temps de tampon prédéfinie, et la commande de transfert est envoyée à l'expiration de la fenêtre de temps de tampon prédéfinie.

5. Dispositif de station de base selon la revendication 4, dans lequel l'unité d'envoi est agencée pour, si la station de base est actuellement dans un intervalle non DTX, d'abord mettre en mémoire tampon la commande de transfert, et ensuite sélectionner une occasion en fonction d'une fenêtre de temps de tampon d'envoyer la commande de transfert en tampon à l'utilisateur cible de la manière suivante :
mise en mémoire tampon de la commande de transfert et détermination si un intervalle DTX est rencontré pendant l'attente dans une fenêtre de temps de tampon prédéfinie ;
si un intervalle DTX est rencontré pendant l'attente dans la fenêtre de temps de tampon prédéfinie, envoi de la commande de transfert dans l'intervalle DTX ; et
si un intervalle DTX n'est pas rencontré pendant l'attente dans la fenêtre de temps de tampon prédéfinie, envoi de la commande de transfert à l'expiration de la fenêtre de temps de tampon prédéfinie.

6. Dispositif de station de base selon l'une quelconque des revendications 4 à 5, dans lequel une plage de configuration initiale de la fenêtre de temps de tampon est 500 ms∼3000 ms.

7. Programme informatique comprenant des instructions de programme, dans lequel quand des instructions de programme sont exécutées par une station de base, la station de base exécute le procédé de transfert intercellulaire dans un système GSM selon l'une quelconque des revendications 1 à 3.

8. Support lisible par un ordinateur supportant le programme informatique selon la revendication 7.
